(19) Europäisches Patentamt
European Patent Office
Office européen des brevets

(11) **EP 3 824 539 B1**

(12) **FASCICULE DE BREVET EUROPEEN**

(45) Date de publication et mention de la délivrance du brevet:
**25.02.2026 Bulletin 2026/09**

(21) Numéro de dépôt: **19731753.0**

(22) Date de dépôt: **24.06.2019**

(51) Classification Internationale des Brevets (IPC):
**H02M 3/337** (2006.01)    **H02M 1/00** (2006.01)

(52) Classification Coopérative des Brevets (CPC):
**H02M 3/3376; H02M 3/01; H02M 3/33573;**
H02M 1/0058; Y02B 70/10; Y02T 10/70;
Y02T 10/7072; Y02T 10/92; Y02T 90/14

(86) Numéro de dépôt international:
**PCT/EP2019/066607**

(87) Numéro de publication internationale:
**WO 2020/015953 (23.01.2020 Gazette 2020/04)**

(54) **PROCÉDÉ DE COMMANDE EN FRÉQUENCE DE LA TENSION D'ENTRÉE D'UN CONVERTISSEUR COURANT CONTINU-COURANT CONTINU**

VERFAHREN ZUR STEUERUNG DER EINGANGSSPANNUNGSFREQUENZ EINES GLEICHSPANNUNGSWANDLERS

METHOD FOR CONTROLLING THE INPUT VOLTAGE FREQUENCY OF A DC-DC CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2018 FR 1856534**

(43) Date de publication de la demande:
**26.05.2021 Bulletin 2021/21**

(73) Titulaire: **Ampere SAS**
**92100 Boulogne-Billancourt (FR)**

(72) Inventeurs:
• **TALEB, Miassa**
**94200 Yvry sur seine (FR)**
• **MALOUM, Abdelmalek**
**94550 Chevilly Larue (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2017 033 701**

• **PANOV VASIL: "LLC resonant converter modelling", 30 April 2014 (2014-04-30), pages 1 - 126, XP055950910, Retrieved from the Internet <URL:https://open.library.ubc.ca/soa/clRcle/collections/ubctheses/24/items/1.0167311> [retrieved on 20220811]**
• **ANDERS LIND: "LLC Converter Design Note", 31 March 2013 (2013-03-31), pages 1 - 19, XP055586415, Retrieved from the Internet <URL:https://www.mouser.com/pdfdocs/2-11.pdf> [retrieved on 20190507]**
• **REZA BEIRANVAND ET AL: "Using LLC Resonant Converter for Designing Wide-Range Voltage Source", IEEE TRANSACTIONS ON INDUSTRIAL ELECTRONICS, IEEE SERVICE CENTER, PISCATAWAY, NJ, USA, vol. 58, no. 5, 1 May 2011 (2011-05-01), pages 1746 - 1756, XP011352895, ISSN: 0278-0046, DOI: 10.1109/TIE.2010.2052537**

**Description**

La présente invention concerne le domaine des chargeurs d'accumulateurs électriques, en particulier pour les véhicules automobiles électriques ou hybrides.

Plus précisément l'invention concerne un procédé de commande en fréquence de la tension d'entrée d'un convertisseur courant continu-courant continu pour un chargeur d'accumulateurs électriques.

Les chargeurs d'accumulateurs électriques, plus communément appelés chargeurs, de véhicules automobiles électriques, nécessitent d'importantes puissances de recharges, par exemple pouvant aller jusqu'à 22kW en triphasé, ou 7kW en monophasé.

Ces chargeurs comprennent généralement deux étages de conversion de puissance : un premier étage de correction du facteur de puissance, plus connu sous son nom anglophone Power Factor Correction, généralement abrégé en PFC, assurant la conversion alternatif/continu (AC/DC) des tensions réseaux vers un bus continu (bus DC) et un deuxième étage de conversion continu-continu, dit DCDC, assurant le contrôle du courant de sortie nécessaire à la charge de la batterie ainsi qu'une isolation galvanique du chargeur grâce à un transformateur.

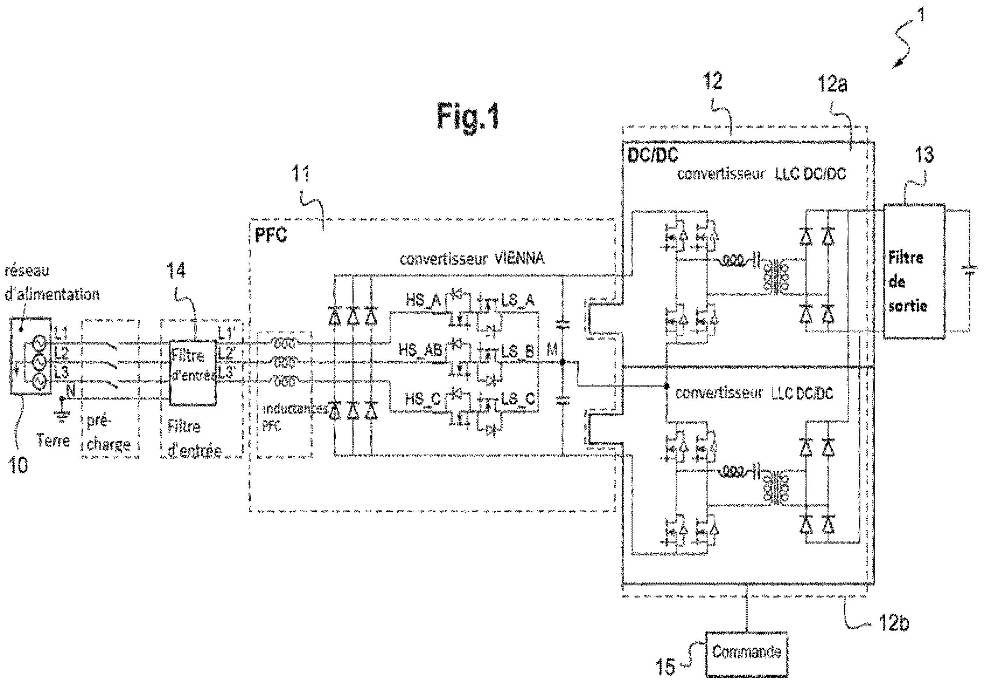

En référence à la figure 1 d'art antérieur, deux bus de tension continue DC de sortie, aux bornes des capacités de sortie, sont couplés à un convertisseur DCDC chacun.

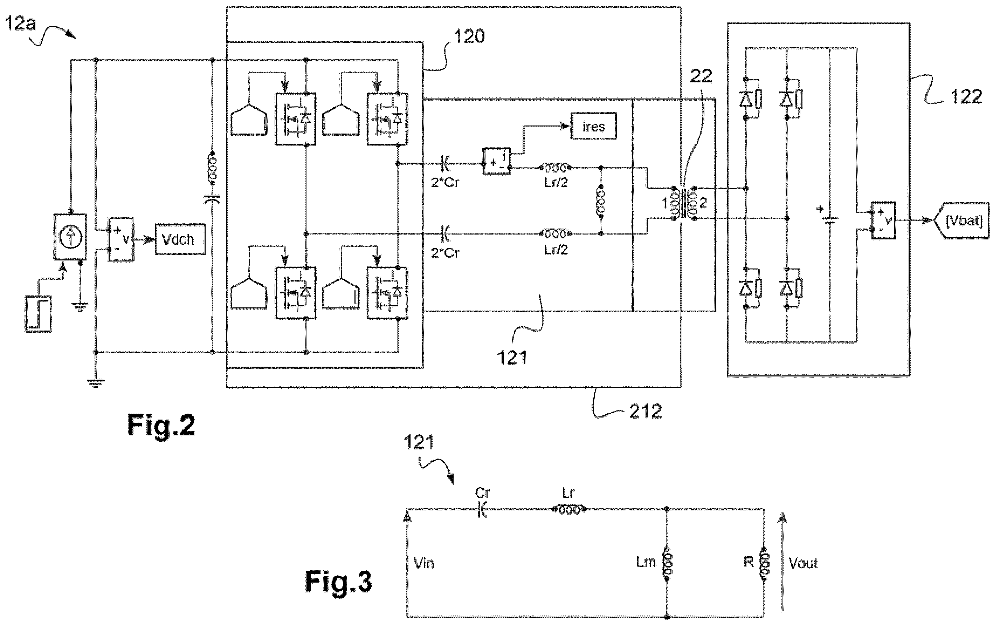

Le DCDC peut notamment être du type LLC, tel que représenté figure 2, comprenant un transformateur 22 assurant une isolation galvanique du chargeur.

La figure 3 représente un schéma simplifié du montage du convertisseur DCDC de la figure 2, comprenant une capacité Cr et deux inductances Lr et Lm. La tension d'entrée correspond au bus continu DC et la tension de sortie est la tension de la batterie. Le gain correspond alors au rapport des deux tensions.

Le premier pont de MOSFET 120 du DCDC de type LLC fonctionne avec un rapport cyclique de 50% et est commandé en fréquence. En effet, une commande en fréquence permet d'adapter le gain du DCDC et de régler la tension des bus DC en entrée du chargeur à une consigne déterminée. Selon la tension de la batterie et la puissance demandée, la fréquence peut fluctuer par exemple entre 60kHz et 200kHz.

Les solutions proposées dans l'art antérieur pour la commande de ce type de convertisseurs DCDC présentent généralement des régulations de la tension de sortie tel que celle divulguée dans la publication *DRGOŇ*A, Peter, FRIVALDSKÝ, Michal, et SIMONOVÁ, Anna. A New Approach of Control System Design for LLC Resonant Converter. In : MATLAB for Engineers-Applications in Control, Electrical Engineering, IT and Robotics. InTech, 2011*,* dans lequel la tension de sortie du DCDC est commandée en utilisant la fréquence de découpage. Une fonction de transfert entre rapport cyclique et tension de sortie est déduite à partir de méthodes d'identification en utilisant un modèle hardware PSPICE simulant des dynamiques des réponses de tension de sortie à un échelon de fréquence. Un régulateur est ensuite conçu en se basant sur la fonction de transfert déduite précédemment.

La fonction de transfert peut aussi être obtenue par la méthode dite « petit signal » qui consiste à déduire une fonction de transfert à partir d'une excitation autour d'un point de fonction, et de la mesure de la réponse du DCDC, tel que décrit dans la thèse de doctorat de YANG, Bo. Topology investigation of front end DC/DC converter for distributed power system. 2003. Néanmoins, cette fonction de transfert n'est valable qu'au point de fonctionnement considéré et devient obsolète à chaque changement de point de fonctionnement. Il est donc nécessaire de la recalculer à chaque fois. Aussi une telle solution est relativement complexe à mettre en œuvre et coûteuse en temps de calcul.

On connaît aussi des commandes en régulation de courant continu si la tension en sortie varie sur une plage réduite.

Enfin on connaît aussi de la publication FANG, Zhijian, WANG, Junhua, DUAN, Shanxu, et al. Control of an LLC Resonant Converter Using Load Feedback Linearization. IEEE Transactions on Power Electronics, 2018, vol. 33, no 1, p. 887-898 une régulation construite par commande linéarisante (aussi appelée en anglais *feedback linearization*) pour commander la tension de sortie d'un DCDC LLC. Cette publication décrit un modèle non linéaire à 7 états, réduit par la suite à 2 états et propose une commande par boucle PI. Toutefois une telle solution impose des adaptations matérielles et logicielles complexes et coûteuses.

Il arrive que la tension de sortie soit imposée par la batterie. En outre, il arrive, en particulier dans les applications de véhicules automobiles électriques que cette tension de sortie varie sur une large plage de valeurs, par exemple entre 250V et 430V.

Aussi, une régulation de la tension DC en entrée comme divulguée dans le document US 2017/033701 A1 est souhaitable, car elle permet d'imposer une tension DC aux bornes des capacités, en sortie du PFC.

Toutefois, la régulation de la tension DC en entrée du convertisseur LLC DCDC est un sujet pour lequel l'art antérieur n'apporte aucune solution satisfaisante.

Il existe dès lors le besoin d'une solution pour commander la tension continue DC en entrée du convertisseur LLC DCDC de manière rapide et fiable. On propose un procédé de commande en fréquence de la tension d'entrée d'un convertisseur de courant continu-courant continu de type LLC fonctionnant avec un rapport cyclique de 50% et commandé en fréquence, comprenant :

- une étape préalable de définition d'une valeur de tension de consigne,
- une étape de calcul d'une valeur de fréquence de commande dudit convertisseur de courant continu-courant continu, obtenue par inversion mathématique de l'expression du gain dudit convertisseur de courant continu-courant continu, en fonction d'une tension batterie de sortie, d'une consigne de puissance d'entrée et de ladite tension d'entrée de consigne ; et
- une étape d'application de la fréquence de commande ainsi calculée audit convertisseur.

Ainsi on peut obtenir une commande du DCDC en entrée de manière relativement simple et rapide.

Avantageusement et de manière non limitative, ledit convertisseur de courant continu-courant continu est de type LLC série résonant défini par des paramètres d'un montage équivalent comprenant deux inductances et une capacité; ladite valeur de fréquence de commande étant fonction desdites deux inductances et de ladite capacité. Ainsi, le calcul de la fréquence de commande est obtenu par une approximation du fonctionnement du DCDC, permettant de simplifier les calculs et de rendre le procédé plus rapide.

L'étape d'application de la fréquence de commande ainsi calculée comprend :

- la définition d'un pas d'incrément fréquentiel ;
- une étape d'initialisation de la fréquence de commande à une valeur initiale de commande correspondant à la fréquence de commande ainsi calculée;
- la définition d'une première valeur de seuil et d'une deuxième valeur de seuil, de la valeur opposée de la première valeur de seuil et de la valeur opposée de la deuxième valeur de seuil ;
- une étape de calcul d'une valeur d'erreur entre une valeur de tension d'entrée mesurée et ladite tension d'entrée de consigne ; et
- une étape de comparaison entre ladite valeur d'erreur et lesdites valeurs de seuil ;
- le procédé comprenant une étape de régulation au cours de laquelle :

    - lorsque ladite valeur d'erreur est comprise entre la première valeur de seuil et la valeur opposée de la première valeur de seuil, et lorsque ladite erreur est supérieure à la deuxième valeur de seuil ou inférieure à la valeur opposée de la deuxième valeur de seuil, on incrémente la fréquence de commande initiale du pas d'incrément fréquentiel ;
    - lorsque ladite valeur d'erreur est comprise entre la deuxième valeur de seuil et la valeur opposée de la deuxième valeur de seuil on maintient la fréquence de commande à sa valeur précédente,
    - si aucune de ces conditions n'est vérifiée on applique comme fréquence de commande, la valeur initiale de commande.

Ainsi, le procédé comprend une commande en fréquence relativement simple, rapide et robuste

Selon une réalisation particulière de l'invention, le procédé comprend une régulation par rétroaction de la fréquence de commande.

L'invention concerne aussi un dispositif de mise en œuvre d'un procédé tel que décrit précédemment.

L'invention concerne aussi un chargeur d'accumulateurs électriques comprenant un étage de correction du facteur de puissance, au moins un convertisseur de courant continu-courant continu, et un dispositif tel que décrit précédemment.

L'invention concerne aussi un véhicule automobile comprenant un chargeur d'accumulateurs électriques tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est une vue schématique d'un chargeur d'accumulateurs électrique connu de l'art antérieur ;

- la figure 2 est une vue de détail d'un convertisseur courant continu-courant continu d'un chargeur selon la figure 1;

- la figure 3 est un schéma simplifié d'un circuit LLC d'un convertisseur courant continu-courant continu selon la figure 2 ; et

- la figure 4 est un organigramme du procédé de commande selon un mode de réalisation de l'invention.

Les figures 1 à 4 se rapportant à un même mode de réalisation, elles seront commentées simultanément.

En référence à la figure 1, un chargeur 1 d'accumulateurs électriques 13 connecté à un réseau électrique triphasé 10 comprend un étage de correction du facteur de puissance 11, aussi appelé étage PFC 11, et des convertisseurs courant continu-courant continu DCDC 12a et 12b comportant chacun un onduleur 212.

Le réseau électrique triphasé 10 est monté à un filtre d'entrée 14 transmettant des courants d'entrée filtrés à l'étage PFC 11.

En sortie du PFC 11 deux bus de tension continue DC, connectés aux bornes des capacités de sortie de l'étape PFC 11, sont couplées chacun à un convertisseur DCDC 12a, 12b, reliés en sortie en parallèle à une batterie d'accumulateurs 13.

Chaque DCDC 12a, 12b, dont un seul exemplaire est représenté figure 2, comprend un pont de MOSFET d'entrée 120, un circuit LLC 121, dont une représentation équivalente simplifiée est représentée figure 3, un transformateur 22 et un pont de diodes de sortie 122.

Le chargeur 1 comprend en outre des moyens de commande 15 des convertisseurs courant continu-courant continu 12 aptes à mettre en œuvre un procédé de commande 4 selon l'invention.

Le procédé de commande 4 selon l'invention vise à commander en fréquence les tensions d'entrée des convertisseurs courant continu-courant continu 12.

A cet effet, le procédé selon l'invention comprend le calcul d'une fréquence de découpage du DCDC.

On sait, en référence à la figure 3, que la fonction de transfert d'un DCDC LLC selon l'invention est de la forme :

$$G = \frac{\eta V_{bat}}{V_{dc}} = \frac{V_{out}}{V_{in}} \qquad (1)$$

Avec G le gain de la fonction de transfert du DCDC (ou tout au moins de la partie onduleur du DC/DC allant jusqu'au primaire du transformateur) ;

$\eta$ le rapport de transformation du transformateur du DCDC ;
$V_{bat}$ la tension aux bornes de la batterie, soit la tension en sortie du DCDC,
$V_{dc}$ la tension continue en entrée du DCDC ;
Et par terminologie générique : $V_{out}$ la tension en sortie du DCDC et $V_{in}$ la tension en entrée du DCDC.

En référence à la figure 3, qui est une vue simplifiée du DCDC, la résistance R équivalente au transformateur du DCDC correspond à la charge batterie ramenée au primaire du transformateur. Aussi R est calculé selon l'équation suivante :

$$R = \frac{8}{\pi^2}\left(\frac{N_P}{N_s}\right)^2 \frac{V_{bat}^2}{P} \qquad (2)$$

Avec $N_P$ et $N_s$ respectivement le nombre de spires au primaire et au secondaire du transformateur. P la puissance au primaire du transformateur et $V_{bat}$ la tension au secondaire du transformateur.

Par conséquent on écrit la fonction de transfert de l'équation (1) comme suite :
La fonction de transfert de ce circuit s'écrit :

$$\frac{V_{out}}{V_{in}} = \frac{R\,L_m C_r\,s^2}{R\,L_m\,C_r\,s^2 + (L_r\,C_r\,s^2 + 1)(R + L_m\,s)} \qquad (3)$$

Aussi pour calculer le gain de la fonction de transfert du DCDC, on calcule :

$$G(s) = \left|\frac{V_{out}}{V_{in}}\right| = \left|\frac{\eta V_{bat}}{V_{DC}}\right| = \left|\frac{R\,L_m C_r\,s^2}{(L_m\,L_r C_r\,s^3 + R C_r(L_m + L_r)s^2 + L_m S + R}\right| \qquad (4)$$

Cette équation (4) est réécrite en fonction de la pulsation $\omega$ ($\omega = 2\pi f_{sw}$), en posant $s=j\omega$.

On peut par conséquent écrire l'équation de gain selon les équations suivantes :

$$G(s) = \left|\frac{V_{out}}{V_{in}}\right| = \left|\frac{\eta V_{bat}}{V_{DC}}\right| = \left|\frac{R\,L_m C_r\,(jw)^2}{(L_m\,L_r C_r\,(jw)^3 + R C_r(L_m + L_r)(jw)^2 + L_m(jw) + R}\right|$$

Ou

$$G(s) = \left|\frac{V_{out}}{V_{in}}\right| = \left|\frac{\eta V_{bat}}{V_{DC}}\right| = \left|\frac{R\, L_m C_r\, (j2\pi f_{sw})^2}{(L_m L_r C_r\, (j2\pi f_{sw})^3 + R C_r (L_m + L_r)(j2\pi f_{sw})^2 + L_m(j2\pi f_{sw}) + R)}\right|$$

En calculant le gain G du transfert, pour obtenir une expression de la fréquence de commande $f_{sw}$ selon l'équation :

$$f_{sw}(\omega) = fct(Vbat, Preq, Vdc(consigne)) \quad (5)$$

Avec $V_{bat}$ la tension batterie, $V_{dc}$ la tension en entrée du DCDC, et Preq une consigne de puissance en entrée du DCDC.

En effet, en remplaçant $V_{dc}$ dans l'expression de G(s) par une valeur de $V_{dc}$ de consigne, on peut calculer la fréquence pour laquelle le bus DC converge à une tension donnée, par exemple à 450V.

Le gain G est calculé comme étant le rapport de $\eta Vbat/Vdc$, soit dans ce mode de réalisation G= $\eta$ Vbat/450V

On en déduit une équation du 3eme ordre dépendant de ($\omega$ = $2\pi f_{s\omega}$),

$$\omega^3 + A\omega^2 + B\omega + C = 0 \qquad (6)$$

Avec les paramètres A, B, C fonction de Vbat, Preq, Lm et Lr les valeurs d'inductances du schéma équivalent du DCDC, et Cr la valeur de capacité du schéma équivalent du DCDC.

La résolution de l'équation (6) en $\omega$ permet de calculer par commande anticipatrice, connue en anglais sous le terme *feedforward*, la fréquence de commande $f_{sw}(\omega)$ du DCDC.

Du fait des dispersions paramétriques et des précisions de calcul, ainsi qu'aux hypothèses simplificatrices prises pour l'écriture de la fonction de transfert du DCDC, l'application de ce calcul direct n'est pas suffisante, pour annuler l'erreur statique entre la tension DC mesurée et la consigne. Toutefois l'erreur reste peu significative et présente un maximum de 30V.

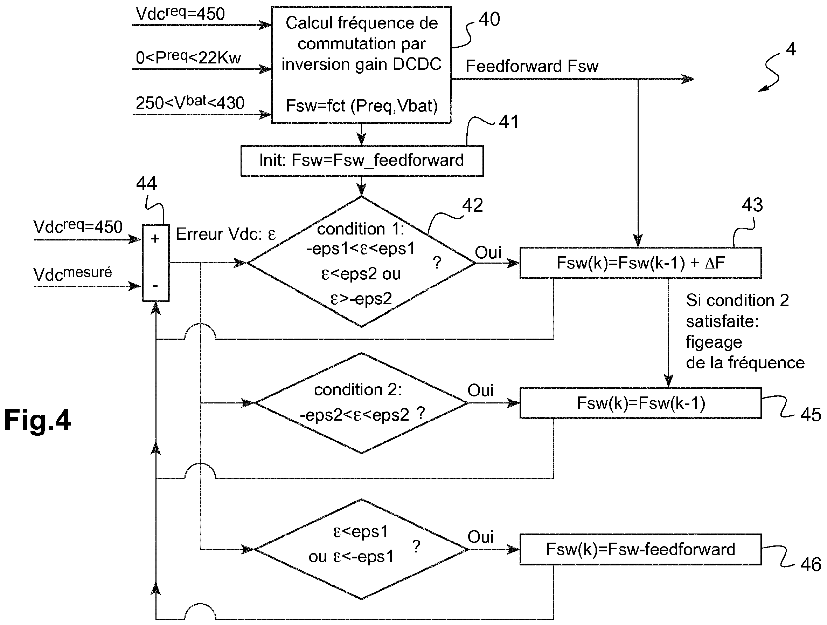

Pour pallier ce problème, en référence à la figure 4, un régulateur a été ajouté au feedforward précédent. Il fonctionne par incrément ou décrément de fréquence jusqu'à annulation de l'erreur statique, et adapte ainsi un peu plus la fréquence initiale générée par le calcul précédent, pour une meilleure précision.

Le régulateur selon le premier mode de réalisation est un régulateur discret dans lequel :

eps1 est une valeur de seuil à partir de laquelle l'incrément/décrément de fréquence commence.

eps2 est une valeur de seuil pour laquelle, la fréquence de commande est figée.

Aussi selon un exemple de réalisation en référence à la figure 4, dans une première étape on calcule 40 la fréquence de commande $f_{sw}(\omega)$, aussi appelée fréquence de commutation $f_{sw}(\omega)$, tel que décrit précédemment, en fonction d'une tension de consigne $V_{DC}^{req}$, par exemple 450V, d'une puissance requise $P^{req}$, par exemple une puissance comprise 0< Preq<11kW, et en fonction d'une tension batterie telle que 250V<$V_{bat}$<430V.

On initialise 41 la valeur de fréquence de commande $f_{sw}(k)$ à la valeur initiale de fréquence $f_{sw\_feedforward}$ précédemment calculée.

Ensuite, on calcule 44 une valeur d'erreur $\varepsilon$ entre la tension de consigne $V_{DC}^{req}$ et la tension mesurée $V_{dc}^{mesurée}$ en entrée du DCDC.

On compare cette valeur d'erreur $\varepsilon$ à deux valeurs de seuil d'erreur eps1 et eps2.

Si (condition 1) l'erreur $\varepsilon$ est comprise entre les limites de eps1 et -eps1, par exemple entre 10V et -10V, et si de plus l'erreur $\varepsilon$ est supérieure à eps2 ou inférieure à -eps2, ces seuils étant par exemple 5V et -5V, on incrémente 43 la valeur de fréquence initiale $f_{sw\_feedforward}$ par incrément d'un pas d'incrément fréquentiel $\Delta F$ soit :

$$f_{sw}(k) = f_{sw\_feedforward} + \Delta F \quad (7)$$

k étant un entier temporel.

Après cette étape 43, on reboucle sur l'étape 44.

Si (condition 2) après l'étape 44 l'erreur $\varepsilon$ est comprise entre les limites de eps2 et -eps2, on fige et on maintient 45 la valeur de la fréquence $f_{sw}(k)$ qui assure un bus DC à 5V prêt de la consigne à la valeur précédente, soit :

$$f_{sw}(k) = f_{sw}(k-1)$$

La valeur $f_{sw}(k-1)$ étant égale à $f_{sw\_feedforward}$ si la condition 1 n'a pas été vérifiée précédemment, ou à

$f_{sw\_feedforward}$ + k * ΔF si l'étape 45 a lieu après k précédentes étapes 43.

Si aucune de ces conditions n'est réalisée à l'étape 44, on utilise 46 la valeur de fréquence $f_{sw}$(k) calculée par feed forward à l'étape 40. Cette valeur est mise à jour périodiquement. La commande continuera à appliquer la fréquence calculée par feedforward tant qu'aucune condition sur l'erreur n'est satisfaite, les étapes 43, 45 et 46 rebouclant sur l'étape 44

L'invention n'est pas limitée aux valeurs d'exemples donnés de seuils d'erreurs eps1 et eps2. Notamment eps2 peut être réglé à 1 ou 0 V, selon la faisabilité du point de fonctionnement.

Cette méthode assure une convergence à fréquence stable, assurée par l'action feedforward, et efficace, grâce à l'action du régulateur qui finit d'annuler l'erreur statique et fait converger le bus DC avec précision à la valeur consigne.

L'invention n'est pas limitée au type de régulateur décrit dans le premier exemple de réalisation. On peut aussi prévoir un régulateur du type Proportionnel Intégral ou Proportionnel Intégral Dérivé, dont l'implémentation est connue de l'homme du métier, et bien que leur réglage soit plus complexe que le régulateur du premier mode de réalisation de l'invention.

**Revendications**

1. Procédé de commande (4) en fréquence de la tension d'entrée d'un convertisseur de courant continu-courant continu (12) de type LLC fonctionnant avec un rapport cyclique de 50% et commandé en fréquence, comprenant :

    - une étape préalable de définition d'une valeur de tension d'entrée de consigne ($V_{dc}^{req}$),
    - une étape de calcul (40) d'une valeur de fréquence de commande ($f_{sw}(\omega)$) dudit convertisseur de courant continu-courant continu (12), et
    - une étape d'application de la fréquence de commande ainsi calculée audit convertisseur,

    ladite valeur de fréquence de commande ($f_{sw}(\omega)$) étant obtenue par résolution d'une équation d'ordre 3 en fréquence exprimant le gain dudit convertisseur de courant continu-courant continu (12), en fonction d'une tension batterie (Vbat) de sortie, d'une consigne de puissance (Preq) d'entrée et de ladite tension d'entrée de consigne ($V_{dc}^{req}$),

    ledit procédé étant **caractérisé en ce que** l'étape d'application de la fréquence de commande ainsi calculée comprend :

        - la définition d'un pas d'incrément fréquentiel (ΔF) ;
        - une étape d'initialisation (41) de la fréquence de commande ($f_{sw}$(k)) à une valeur initiale de commande ($f_{sw\_feedforward}$) correspondant à la fréquence de commande ainsi calculée;
        - la définition d'une première valeur de seuil (eps1) et d'une deuxième valeur de seuil (eps2), de la valeur opposée de la première valeur de seuil (-eps1) et de la valeur opposée de la deuxième valeur de seuil (-eps2) ;
        - une étape de calcul (44) d'une valeur d'erreur (ε) entre une valeur de tension d'entrée mesurée ($V_{dc}^{mesurée}$) et ladite tension d'entrée de consigne ($V_{dc}^{req}$) ; et
        - une étape de comparaison (42) entre ladite valeur d'erreur et lesdites valeurs de seuil (eps1, -eps1, eps2, -eps2) ;
        - le procédé comprenant une étape de régulation au cours de laquelle :

            • lorsque et tant que ladite valeur d'erreur est comprise entre la première valeur de seuil (eps1) et la valeur opposée de la première valeur de seuil (-eps1), et lorsque ladite erreur est supérieure à la deuxième valeur de seuil (eps2) ou inférieure à la valeur opposée de la deuxième valeur de seuil (-eps2), on incrémente (43) la fréquence de commande ($f_{sw}$(k)) du pas d'incrément fréquentiel (ΔF) ;
            • lorsque ladite valeur d'erreur est comprise entre la deuxième valeur de seuil (eps2) et la valeur opposée de la deuxième valeur de seuil (-eps2) on maintient (45) la fréquence ($f_{sw}$(k)) de commande à sa valeur précédente,
            • si aucune de ces conditions n'est vérifiée on applique comme fréquence de commande, la valeur initiale de commande.

2. Procédé (4) selon la revendication 1, **caractérisé en ce que** ledit convertisseur de courant continu-courant continu est de type LLC série résonant défini par des paramètres d'un montage équivalent comprenant deux inductances (Lm, Lr) et une capacité (Cr) ;
ladite valeur de fréquence de commande ($f_{sw}(\omega)$) étant fonction desdites deux inductances (Lm, Lr) et de ladite capacité (Cr).

**Patentansprüche**

1. Verfahren (4) zur Frequenzsteuerung der Eingangsspannung eines Gleichstrom-Gleichstrom-Wandlers (12) vom Typ LLC, der mit einem Tastverhältnis von 50 % arbeitet und frequenzgesteuert wird, umfassend:

   - einen vorherigen Schritt des Festlegens eines Eingangsspannungssollwerts ($V_{dc}^{req}$),
   - einen Schritt des Berechnens (40) eines Steuerfrequenzwerts ($f_{sw}(\omega)$) des Gleichstrom-Gleichstrom-Wandlers (12), und
   - einen Schritt des Anwendens der so berechneten Steuerfrequenz auf den Wandler,

   wobei der Steuerfrequenzwert ($f_{sw}(\omega)$) erhalten wird durch Lösen einer Gleichung der Ordnung 3 in der Frequenz, die die Verstärkung des Gleichstrom-Gleichstrom-Wandlers (12) ausdrückt, in Abhängigkeit von einer Batterieausgangsspannung (Vbat), von einem Eingangsleistungssollwert (Preq) und von der Solleingangsspannung ($V_{dc}^{req}$),

   wobei dieses Verfahren **dadurch gekennzeichnet ist, dass** der Schritt des Anwendens der so berechneten Steuerfrequenz umfasst:

   - das Festlegen eines frequenzbezogenen Inkrementschritts ($\Delta F$);
   - einen Schritt des Initialisierens (41) der Steuerfrequenz ($f_{sw}(k)$) auf einen Steuerausgangswert ($f_{sw\_feedforward}$), der der so berechneten Steuerfrequenz entspricht;
   - das Festlegen eines ersten Schwellenwerts (eps1) und eines zweiten Schwellenwerts (eps2), des zu dem ersten Schwellenwert entgegengesetzten Werts (-eps1) und des zu dem zweiten Schwellenwert entgegengesetzten Werts (-eps2);
   - einen Schritt des Berechnens (44) eines Fehlerwerts ($\varepsilon$) zwischen einem gemessenen Eingangsspannungswert ($V_{dc}^{gemessen}$) und der Solleingangsspannung ($V_{dc}^{req}$) ; und
   - einen Schritt des Vergleichens (42) zwischen dem Fehlerwert und den Schwellenwerten (eps1, -eps1, eps2, - eps2);
   - wobei das Verfahren einen Regelungsschritt umfasst, bei dem:

     • wenn und solange der Fehlerwert zwischen dem ersten Schwellenwert (eps1) und dem zu dem ersten Schwellenwert entgegengesetzten Wert (-eps1) liegt und wenn der Fehler größer als der zweite Schwellenwert (eps2) oder kleiner als der zu dem zweiten Schwellenwert entgegengesetzten Wert (-eps2) ist, die Steuerfrequenz ($f_{sw}(k)$) um den frequenzbezogenen Inkrementschritt ($\Delta F$) inkrementiert (43) wird;
     • wenn der Fehlerwert zwischen dem zweiten Schwellenwert (eps2) und dem zu dem zweiten Schwellenwert entgegengesetzten Wert (-eps2) liegt, die Steuerfrequenz ($f_{sw}(k)$) auf ihrem vorherigen Wert gehalten (45) wird,
     • wenn keine dieser Bedingungen erfüllt ist, der Steuerausgangswert als Steuerfrequenz angewandt wird.

2. Verfahren (4) nach Anspruch 1, **dadurch gekennzeichnet, dass** der Gleichstrom-Gleichstrom-Wandler vom Typ serieller LLC-Resonanzwandler ist, der durch Parameter einer äquivalenten Schaltung definiert wird, die zwei Induktivitäten (Lm, Lr) und eine Kapazität (Cr) umfasst;
   wobei der Steuerfrequenzwert ($f_{sw}(\omega)$) eine Funktion der beiden Induktivitäten (Lm, Lr) und der Kapazität (Cr) ist.

**Claims**

1. Method (4) for controlling the frequency of the input voltage of an LLC DC-to-DC converter (12) which operates with a duty cycle of 50% and is frequency-controlled, comprising:

   - a preliminary step of defining a setpoint input voltage value ($V_{dc}^{req}$),
   - a step (40) of calculating a control frequency value ($f_{sw}(\omega)$) for said DC-to-DC converter (12), and
   - a step of applying the control frequency calculated in this way to said converter,

   said control frequency value ($f_{sw}(\omega)$) being obtained by solving a 3rd-order frequency equation expressing the gain of said DC-to-DC converter (12), on the basis of an output battery voltage (Vbat), an input power setpoint (Preq) and said setpoint input voltage ($V_{dc}^{req}$),

   said method being **characterized in that** the step of applying the control frequency calculated in this way comprises:

- defining a frequency increment step ($\Delta F$);
- a step (41) of initializing the control frequency ($f_{sw}(k)$) to an initial control value ($f_{sw\_feedforward}$) that corresponds to the control frequency calculated in this way;
- defining a first threshold value (eps1) and a second threshold value (eps2), and the additive inverse of the first threshold value (-eps1) and the additive inverse of the second threshold value (-eps2);
- a step (44) of calculating an error value ($\varepsilon$) between a measured input voltage value ($V_{dc}^{measured}$) and said setpoint input voltage ($V_{dc}^{req}$); and
- a step (42) of comparing said error value with said threshold values (eps1, -eps1, eps2, -eps2);
- the method comprising a regulating step during which:

  • when and as long as said error value is between the first threshold value (eps1) and the additive inverse of the first threshold value (-eps1), and when said error is higher than the second threshold value (eps2) or lower than the additive inverse of the second threshold value (-eps2), the control frequency ($f_{sw}(k)$) is incremented (43) by the frequency increment step ($\Delta F$);
  • when said error value is between the second threshold value (eps2) and the additive inverse of the second threshold value (-eps2), the control frequency ($f_{sw}(k)$) is kept (45) at its previous value;
  • if none of these conditions is met, the initial control value is applied as the control frequency.

2.  Method (4) according to Claim 1, **characterized in that** said DC-to-DC converter is an LLC series resonant DC-to-DC converter, which is defined by parameters of an equivalent circuit comprising two inductors (Lm, Lr) and a capacitor (Cr);
said control frequency value ($f_{sw}(\omega)$) being a function of the values of said two inductors (Lm, Lr) and said capacitor (Cr).

Fig.1

réseau
d'alimentation

Terre

précharge

Filtre
d'entrée

14

Filtre
d'entrée

PFC

11

inductances
PFC

convertisseur VIENNA

HS_A       LS_A

HS_AB      LS_B     M

HS_C       LS_C

DC/DC

convertisseur LLC DC/DC

12        12a

1

convertisseur LLC DC/DC

Filtre
de
sortie

13

12b

Commande

15

L1  L2  L3  N

L1'  L2'  L3'

10

EP 3 824 539 B1

9

Fig.2

Fig.3

**Fig.4**

Vdc$^{req}$=450 → 

0<P$^{req}$<22Kw →

250<V$^{bat}$<430 →

Calcul fréquence de
commutation par
inversion gain DCDC

Fsw=fct (Preq,Vbat)

40

Feedforward Fsw

4

41

Init: Fsw=Fsw_feedforward

44

Vdc$^{req}$=450 →

Vdc$^{mesuré}$ →

+ / −

Erreur Vdc: ε

condition 1:
-eps1<ε<eps1
ε<eps2 ou
ε>-eps2   ?

42

Oui

Fsw(k)=Fsw(k-1) + ΔF

43

Si condition 2
satisfaite:
figeage
de la fréquence

condition 2:
-eps2<ε<eps2 ?

Oui

Fsw(k)=Fsw(k-1)

45

ε<eps1
ou ε<-eps1   ?

Oui

Fsw(k)=Fsw-feedforward

46

## RÉFÉRENCES CITÉES DANS LA DESCRIPTION

**Documents brevets cités dans la description**

- US 2017033701 A1

**Littérature non-brevet citée dans la description**

- **A, PETER, ; FRIVALDSKÝ, MICHAL ; SIMONOVÁ, ANNA.** A New Approach of Control System Design for LLC Resonant Converter.. *In : MATLAB for Engineers-Applications in Control, Electrical Engineering, IT and Robotics. InTech*, 2011
- **YANG, BO.** *Topology investigation of front end DC/DC converter for distributed power system.*, 2003

- **FANG ; ZHIJIAN, ; WANG ; JUNHUA, ; DUAN ; SHANXU et al.** Control of an LLC Resonant Converter Using Load Feedback Linearization.. *IEEE Transactions on Power Electronics*, 2018, vol. 33 (1), 887-898